# FASCICULE DE BREVET EUROPEEN

(11) **EP 1 351 849 B1**
(45) Date de publication et mention de la délivrance du brevet: **14.07.2004**
(21) Numéro de dépôt: 01270445.8
(22) Date de dépôt: 10.12.2001
(51) Int. Cl.: B60T 13/57

(54) **SERVOMOTEUR POUR FREINAGE D'URGENCE COMPORTANT DES MOYENS DE VERROUILLAGE PAR OBSTACLE RADIAL**
SERVOMOTOR FÜR NOTBREMSE MIT MITTELN ZUR VERRIEGELUNG DURCH EIN RADIALES HINDERNIS
EMERGENCY BRAKE BOOSTER COMPRISING RADIAL OBSTACLE LOCKING MEANS

(30) Priorité: 14.12.2000 FR 0016460
(43) Date de publication de la demande: 15.10.2003
(73) Titulaire: ROBERT BOSCH GmbH, 70442 Stuttgart (DE)
(72) Inventeur: CASTELLO, Olivier, F-93140 BONDY (FR); MALIGNE, Jean-Charles, F-93300 AUBERVILLIERS (FR); RICHARD, Philippe, F-77500 CHELLES (FR)
(74) Mandataire: Hurwic, Aleksander Wiktor
(86) Numéro de dépôt international: PCT/FR2001/003911
(87) Numéro de publication internationale: WO 2002/047951

(56) Documents cités:
- DE-A- 19 831 961
- DE-A- 19 835 772
- DE-A- 19 902 710
- FR-A- 2 776 257

## Description

L'invention concerne un servomoteur pneumatique d'assistance au freinage pour un véhicule automobile.

L'invention concerne plus particulièrement un servomoteur pneumatique d'assistance au freinage pour un véhicule automobile, du type qui comporte une enveloppe rigide à l'intérieur de laquelle est mobile une cloison transversale délimitant de façon étanche une chambre avant, soumise à une première pression de dépression par exemple moteur ou d'une pompe à vide, et une chambre arrière soumise à une deuxième pression variant entre la dépression et la pression atmosphérique, du type qui comporte un piston mobile solidaire de la cloison mobile se déplaçant avec la cloison mobile et une tige de commande se déplaçant dans le piston sélectivement en fonction d'un effort axial d'entrée exercé vers l'avant à l'encontre d'un effort de rappel exercé sur la tige par un ressort de rappel, du type dans lequel la tige est mobile suivant une position d'actionnement intermédiaire ou une position d'actionnement extrême obtenue lorsque l'effort d'entrée est appliqué à une vitesse élevée déterminée, du type qui comporte un plongeur qui est agencé à l'avant de la tige de commande dans le piston et un clapet à trois voies qui comporte au moins un siège annulaire arrière du plongeur et qui est susceptible de faire varier la deuxième pression régnant dans la chambre arrière, notamment en mettant en communication la chambre avant et la chambre arrière lorsque la tige de commande est en position de repos ou en mettant progressivement la chambre arrière en communication avec la pression atmosphérique lorsque la tige de commande est actionnée, du type dans lequel, dans la position extrême d'actionnement de la tige de commande, un palpeur monté coulissant à l'extrémité avant du plongeur est sollicité par le plongeur au contact d'un disque de réaction solidaire du piston mobile pour transmettre au plongeur et à la tige de commande l'effort de réaction du piston mobile, et du type qui comporte un dispositif d'embrayage unidirectionnel qui comporte une douille coaxiale solidaire du palpeur et montée coulissante sur le plongeur et des moyens d'obstacle qui sont susceptibles, lorsque l'effort d'entrée est appliqué à la vitesse déterminée, de coopérer avec la périphérie de la douille pour la bloquer dans une position axiale avant extrême dans laquelle le palpeur est bloqué axialement indépendamment du plongeur et de la tige de commande.

De manière connue, une telle conception présente des avantages considérables en termes de sécurité lors d'une situation de freinage d'urgence.

En effet, un servomoteur conventionnel ne comporte ni palpeur, ni dispositif d'embrayage unidirectionnel du palpeur. Le plongeur est susceptible de venir solliciter directement le disque de réaction solidaire de la face arrière du piston mobile.

Dans une situation de freinage extrême pour laquelle un effort de freinage maximal est exercé sur la tige de commande, l'actionnement de la tige de commande provoque l'actionnement du plongeur formant aussi palpeur, ce qui provoque l'ouverture maximale du clapet à trois voies de manière que la chambre arrière soit mise à la pression atmosphérique. Il s'ensuit un déplacement vers l'avant de la cloison mobile et l'extrémité du plongeur vient au contact du disque de réaction solidaire de la face arrière du piston mobile.

Ainsi, l'effort exercé sur le piston mobile lorsque la tige de commande est en fin de course résulte de l'effort d'assistance qui est provoqué par la différence de pression de chaque côté de la paroi mobile et de l'effort exercé par le plongeur formant palpeur sur ledit piston mobile. Le conducteur du véhicule ressent par ailleurs l'effort de réaction du freinage, qui est transmis du piston mobile au plongeur par l'intermédiaire du disque de réaction.

Or, on a constaté que bon nombre de conducteurs, confrontés à une situation de freinage d'urgence, sous-estimaient les risques encourus, et que, après avoir freiné brutalement, ils relâchaient leur effort de freinage alors que le maintien d'un effort de freinage était indispensable pour éviter un accident.

En effet, dans le cas d'une situation de freinage extrême accompagnée d'un déplacement rapide de la tige de commande, le plongeur peut venir au contact du disque de réaction et transmettre au conducteur une sensation de freinage maximal avant même que la différence de pression ne soit maximale entre les chambres de pression avant et arrière, ce qui peut conduire le conducteur à relâcher son effort, quand bien même il devrait être maintenu pour bénéficier de l'effort de freinage maximal.

Un servomoteur tel que celui du type décrit précédemment permet de remédier à cet inconvénient en bloquant le palpeur solidaire de la douille au contact du disque de réaction, et donc de maintenir un effort maximal sur la face arrière du piston mobile quand bien même le conducteur aurait partiellement relâché son effort.

Toutefois, le servomoteur du type décrit précédemment présente l'inconvénient de ne garantir l'immobilisation axiale du palpeur et de la douille que de façon relativement imprécise.

En effet, la clé bloquant la douille par simple coincement, c'est-à-dire par l'intermédiaire d'un contact linéique, voire quasi-ponctuel, entre un bord d'une lumière circulaire de la clé et la périphérie de la douille, la douille est susceptible de glisser au contact de la clé.

Pour remédier à cet inconvénient, l'invention propose des moyens permettant l'immobilisation de la douille par un obstacle de direction sensiblement radiale.

Dans ce but, l'invention propose un servomoteur du type décrit précédemment, caractérisé en ce que les moyens d'obstacle comportent un élément dont au moins une partie annulaire entoure la douille et qui est rappelé élastiquement suivant une direction sensiblement radiale en direction de la périphérie de la douille pour, lorsque l'effort d'entrée est appliqué à la vitesse déterminée, être reçu dans une gorge de la douille et bloquer le palpeur.

Selon d'autres caractéristiques de l'invention :
- l'élément d'obstacle présente la forme d'une fourche, qui est montée coulissante suivant la direction radiale à l'intérieur d'un logement du piston de forme complémentaire, qui comporte une première branche centrale radiale qui est sollicitée en direction de la périphérie de la douille par un ressort de rappel prenant appui sur le corps du piston, et dont deux deuxièmes branches latérales parallèles opposées qui entourent la douille sont susceptibles, lorsque l'effort d'entrée est relâché, d'être sollicitées à l'encontre de l'effort de rappel par un dispositif de débrayage pour repousser radialement l'élément hors de la gorge de la douille,
- le dispositif de débrayage comporte au moins une came qui est montée pivotante dans le corps du piston autour d'un axe perpendiculaire à la direction radiale des branches de l'élément d'obstacle, dont un premier bossage est en appui sur l'une au moins des deuxièmes branches de l'élément d'obstacle, et dont un deuxième bossage est susceptible, lorsque l'effort d'entrée est relâché, de venir au contact d'une face d'appui transversale de l'enveloppe du servomoteur pour provoquer le pivotement de la came et repousser radialement l'élément d'obstacle hors de la gorge de la douille,
- l'élément d'obstacle présente la forme d'un anneau qui entoure la douille avec jeu et à partir duquel s'étendent extérieurement une première et une deuxième branche inclinées et diamétralement opposées, la première branche présentant la forme d'un arc de cercle coplanaire avec l'axe du servomoteur et étant montée coulissante dans un logement formant glissière de forme complémentaire, et la deuxième branche étant, d'une part, sollicitée en éloignement de la périphérie de la douille par un ressort de rappel prenant appui sur le corps du piston et étant, d'autre part, susceptible lorsque l'effort d'entrée est relâché, d'être sollicitée à l'encontre de l'effort de rappel par un dispositif de débrayage pour repousser radialement l'élément hors de la gorge de la douille,
- la concavité de la première branche en arc de cercle et du logement complémentaire formant glissière sont tournées vers l'arrière et vers l'extérieur du servomoteur,
- la deuxième branche est sensiblement rectiligne et est inclinée dans le prolongement de l'extrémité de jonction de la première branche avec l'anneau,
- la profondeur de la gorge de la douille est proportionnelle au rayon commun de l'arc de courbure de la première branche et du logement formant glissière,
- le dispositif de débrayage comporte une crosse qui emprisonne l'extrémité de la deuxième branche et dont une face transversale tournée vers l'arrière est susceptible, lorsque l'effort d'entrée est relâché, de venir au contact d'une face d'appui transversale de l'enveloppe du servomoteur pour provoquer le coulissement de l'élément d'obstacle et le repousser radialement hors de la gorge de la douille,
- le ressort de rappel de l'élément est un ressort hélicoïdal de compression qui est monté suivant une direction inclinée par rapport à l'axe du servomoteur, et qui est agencé entre le corps du piston et un pion de centrage qui est porté par une face avant de la crosse,
- la douille est tubulaire, d'un diamètre intérieur égal à un diamètre extérieur d'une partie avant du plongeur,
- la longueur axiale du plongeur n'excède pas la longueur axiale de la douille dans laquelle il est reçu, de manière à proposer un dégagement arrière maximum pour le passage de l'air entre la chambre arrière et le milieu extérieur soumis à la pression atmosphérique.

D'autres caractéristiques et avantages de l'invention apparaîtront à la lecture de la description détaillée qui suit pour la compréhension de laquelle on se reportera aux dessins annexés dans lesquels :
- la figure 1 est une vue en coupe axiale d'ensemble d'un servomoteur pneumatique d'assistance au freinage réalisé conformément à l'invention ;
- la figure 2 est une vue de détail en perspective du piston et du dispositif d'embrayage unidirectionnel d'un servomoteur réalisé conformément à un premier mode de réalisation de l'invention ;
- la figure 3 est une vue de détail en coupe axiale du servomoteur de la figure 2, représenté au cours d'un aller et/ou d'un retour du piston lors de l'application lente d'un effort d'entrée sur la tige de commande ;
- la figure 4 est une vue de détail en coupe axiale du servomoteur de la figure 2, représenté au cours d'un aller du piston lors de l'application rapide d'un effort d'entrée sur la tige de commande ;
- la figure 5 est une vue de détail en coupe axiale du servomoteur de la figure 2, représenté au cours de la phase finale d'un retour du piston lors de l'application rapide d'un effort d'entrée sur la tige de commande ;
- la figure 6 est une vue de détail en perspective du piston et du dispositif d'embrayage unidirectionnel d'un servomoteur réalisé conformément à un second mode de réalisation de l'invention ;
- la figure 7 est une vue de détail en coupe axiale du servomoteur de la figure 6, représenté au cours d'un aller et/ou d'un retour du piston lors de l'application lente d'un effort d'entrée sur la tige de commande ;
- la figure 8 est une vue de détail en coupe axiale du servomoteur de la figure 6, représenté au cours d'un aller du piston lors de l'application rapide d'un effort d'entrée sur la tige de commande ;
- la figure 9 est une vue de détail en coupe axiale du servomoteur de la figure 6, représenté au cours de la phase finale d'un retour du piston lors de l'application rapide d'un effort d'entrée sur la tige de commande.

Dans la description qui va suivre, des chiffres de référence identiques désignent des pièces identiques ou ayant des fonctions similaires.

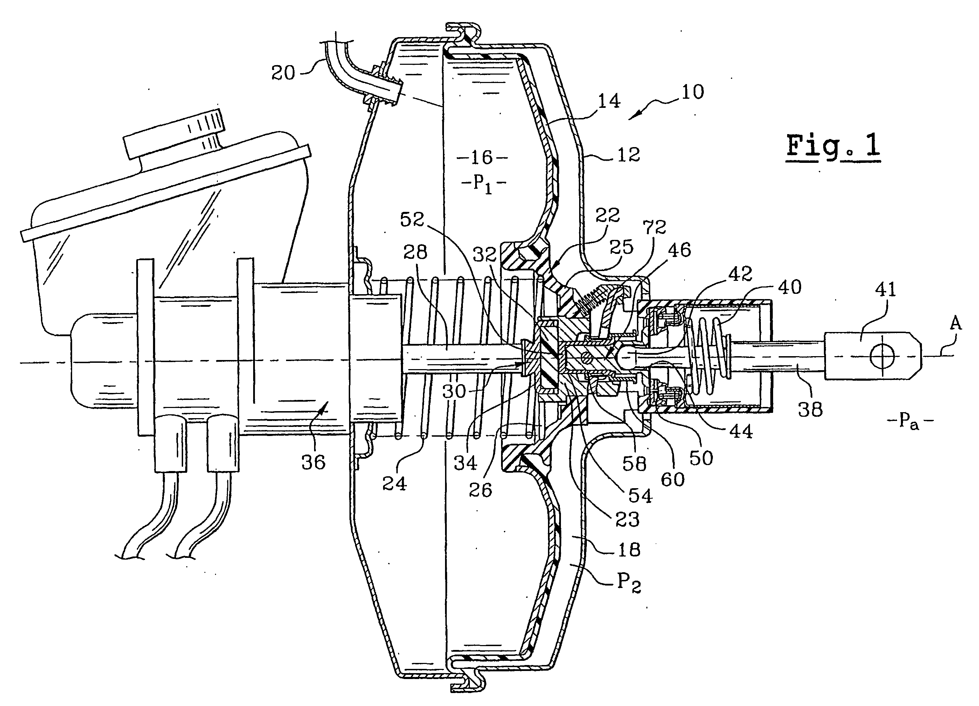

Par convention, les termes "avant", "arrière", supérieur", "inférieur" désignent respectivement des éléments ou des positions orientés respectivement vers la gauche, la droite, le haut, ou le bas des figures 1 à 9.

On a représenté à la figure 1 l'ensemble d'un servomoteur 10 pneumatique d'assistance au freinage pour un véhicule automobile.

De manière connue, le servomoteur pneumatique 10 comporte une enveloppe rigide 12 à l'intérieur de laquelle est montée mobile une cloison 14 transversale qui délimite de façon étanche une chambre avant 16, soumise à une première pression "P₁" dont la valeur est égale à la valeur de la dépression par exemple du moteur du véhicule ou d'une pompe à vide, et une chambre arrière 18 soumise à une deuxième pression "P₂". La deuxième pression "P₂" est susceptible, comme il sera décrit ultérieurement, de varier entre la valeur de dépression "P₁" et la valeur de la pression atmosphérique "Pₐ".

La chambre avant 16 est alimentée en pression "P₁" par l'intermédiaire d'un conduit 20 de dépression qui est relié à une source de dépression du véhicule, par exemple une dépression régnant dans un collecteur d'admission (non représenté) d'un moteur du véhicule ou d'une pompe à vide.

Le servomoteur pneumatique 10 comporte un piston mobile 22 qui est solidaire de la cloison mobile 14. A l'intérieur de l'enveloppe 12, la cloison mobile 14 est rappelée élastiquement vers l'arrière par un ressort 24 de rappel qui prend appui sur l'enveloppe 12 et sur une face avant 26 du piston mobile 22. La face avant 26 du piston mobile 22 reçoit une coupelle 30 de réaction à l'intérieur de laquelle est agencée, comme on le verra plus loin, un disque de réaction 32 en matériau élastomère. Une face avant 34 de la coupelle 30 de réaction est solidaire d'une tige d'actionnement 28, qui est par conséquent est solidaire des déplacements du piston mobile 22, et qui permet l'actionnement d'un maître-cylindre 36 hydraulique de freinage du véhicule.

Plus particulièrement, le piston mobile 22 comporte un élément tubulaire central 23, qui est solidaire d'un élément tubulaire périphérique 25 coaxial avec l'élément tubulaire 23. L'élément tubulaire 25 porte la face avant 26 du piston mobile 22, et une partie avant formant coupelle de l'élément tubulaire central 23 est destiné à recevoir la coupelle de réaction 30.

Une tige 38 de commande, qui est par exemple reliée à une pédale de frein du véhicule par l'intermédiaire d'un manchon 41 d'accouplement qui est agencé à son extrémité libre arrière, est susceptible de se déplacer dans le piston mobile 22, et plus particulièrement dans l'élément tubulaire central 23, sélectivement en fonction d'un effort axial d'entrée exercé vers l'avant sur la tige 38 de commande. L'effort d'actionnement est exercé suivant l'axe A du servomoteur 10 à l'encontre d'un effort de rappel qui est exercé sur la tige 38 par un ressort de rappel 40 qui est interposé entre le piston mobile 22 et la tige 38 de commande.

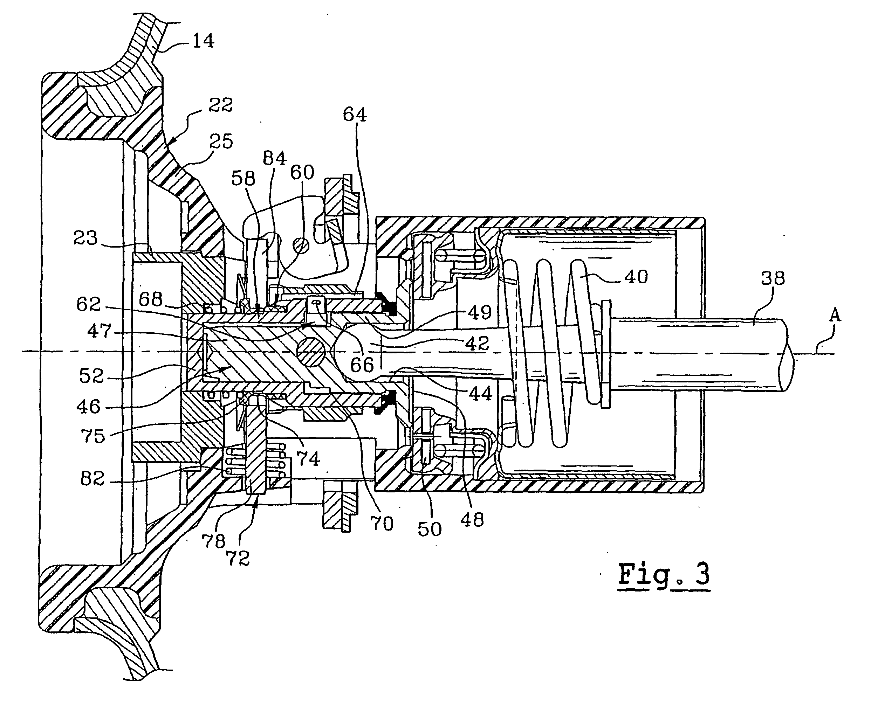

Comme on peut le voir plus particulièrement aux figures 3 à 5 et 7 à 9, l'extrémité avant de la tige 38 de commande est conformée en rotule 42 et elle est reçue dans un logement complémentaire 44 d'un plongeur 46 qui est sensiblement cylindrique et qui est monté coulissant dans le piston mobile 22. Plus particulièrement, le logement 44 est agencé dans une partie arrière 49 du plongeur 46 conformée en épaulement.

Un siège annulaire arrière 48 du plongeur 46, agencé à l'extrémité de la partie arrière 49 du plongeur 46, fait partie d'un clapet 50 à trois voies qui est susceptible de faire varier la deuxième pression "P₂"'régnant dans la chambre arrière 18, notamment en mettant en communication la chambre avant 16 et la chambre arrière 18 lorsque la tige 38 de commande est en position de repos, ou en mettant progressivement la chambre arrière 18 en communication avec la pression atmosphérique "Pₐ" lorsque la tige 38 de commande est actionnée.

Le fonctionnement du clapet à trois voies 50 étant connu de l'état de la technique, il ne sera pas décrit plus explicitement dans la présente description.

De manière connue, un palpeur 52 est monté coulissant à la fois sur une extrémité avant d'une partie avant 47, opposée à la partie arrière 49, du plongeur 46, et à l'intérieur d'un alésage 54 de l'élément central 23 du piston mobile 22 qui débouche en regard de la coupelle de réaction 30. De la sorte, le palpeur 52 est susceptible d'être sollicité par le plongeur 46 pour solliciter à son tour le disque 32 de réaction et le comprimer, ce qui permet ainsi de transmettre au plongeur 46 et, ce faisant, à la tige de commande 38, l'effort de réaction du piston mobile 26 dans une position d'actionnement extrême de fin de course de la tige de commande 38.

De manière connue, le servomoteur comporte un dispositif d'embrayage unidirectionnel qui comporte une douille 58 coaxiale dont fait partie le palpeur 52. Plus particulièrement le palpeur 52 est réalisé venu de matière avec l'extrémité avant de la douille 58. La douille 58 est tubulaire, d'un diamètre intérieur égal à un diamètre de la partie avant 47 du plongeur 46, et elle est montée coulissante sur le plongeur 46. La douille 58 est rappelée élastiquement vers l'arrière du servomoteur 10.

Le dispositif d'embrayage unidirectionnel comporte des moyens d'obstacle qui sont susceptibles, lorsque l'effort d'entrée est appliqué à la vitesse déterminée, de coopérer avec la périphérie de la douille 58 pour la bloquer dans une position axiale avant extrême dans laquelle le palpeur 52 est bloqué axialement indépendamment du plongeur 46 et de la tige de commande 38.

Plus particulièrement, une douille supplémentaire 60 entoure un tronçon intermédiaire de la douille 58. Cette douille supplémentaire 60 est liée à la douille 58.

La douille supplémentaire 60 peut par exemple être vissée sur un filetage du tronçon intermédiaire de la douille 58, ou bien par exemple être montée sur celui-ci par l'intermédiaire d'un ajustement serré. En variante (non représentée) la douille 60 peut aussi être venue de matière avec la douille 58. La douille 60 est rappelée élastiquement par l'intermédiaire d'un ressort 68, qui est interposé entre l'élément central 23 du piston 22 et la douille 60.

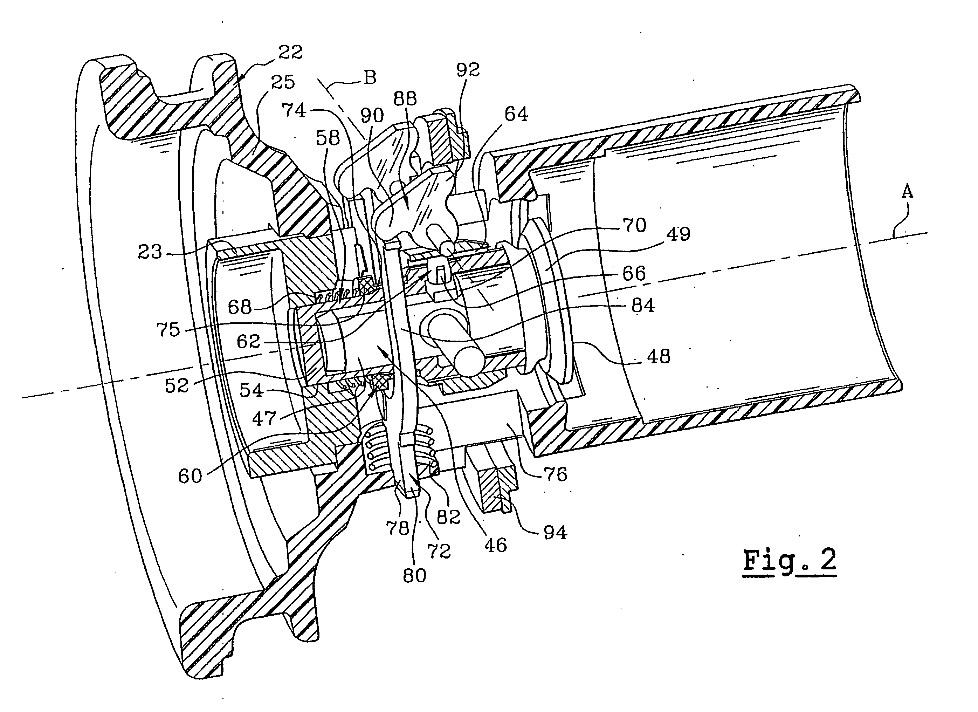

Selon le premier mode de réalisation qui est représenté aux figures 2 à 5, la douille 58 est immobilisée en rotation par rapport au piston 22 par l'intermédiaire d'un pion 62 qui traverse la douille 58 et dont la partie qui fait saillie hors de la douille 58 est reçue à l'intérieur d'un logement 64 d'une partie arrière de l'élément central 23. Ce pion 62 comporte des moyens d'immobilisation à l'intérieur du logement 64, notamment au moins un patte radiale élastique 66.

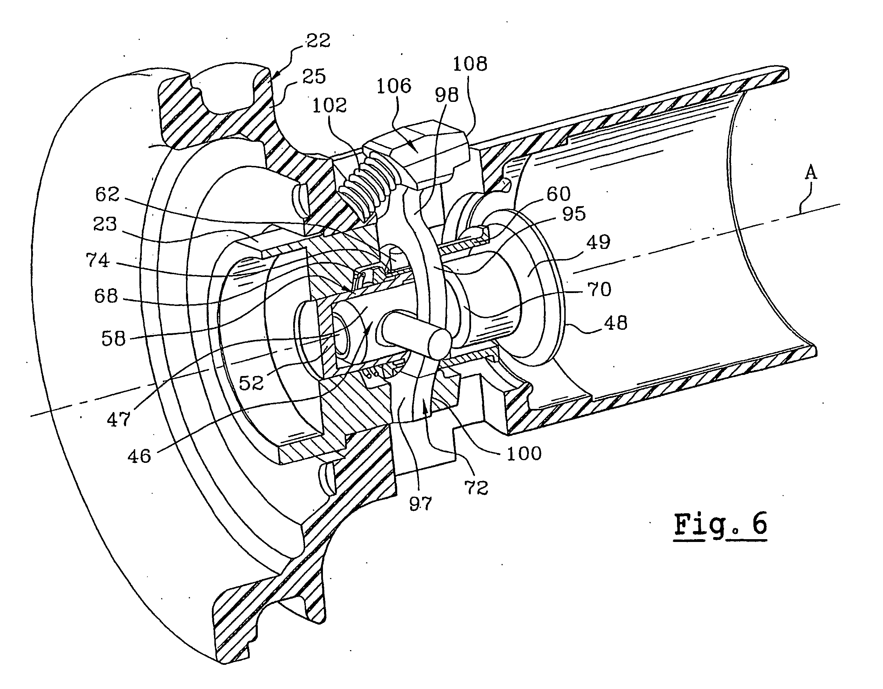

En variante, selon le deuxième mode de réalisation qui est représenté aux figures 6 à 9, la douille supplémentaire 60 entoure le tronçon intermédiaire de la douille 58 mais aussi un tronçon arrière de la douille 58, et le pion 62 traverse à la fois la douille 58 et la douille supplémentaire 60 pour réaliser leur liaison. L'immobilisation en rotation de la douille 58 par rapport au piston 22 est obtenue par l'intermédiaire d'un élément 72 qui sera décrit ultérieurement.

Dans cette configuration, la douille 58 coulisse sur la partie avant 47 du plongeur 46 et la douille supplémentaire 60 est rappelée élastiquement par l'intermédiaire du ressort 68, qui est interposé entre le piston 22 et la douille 60. De cette manière, la douille 60 étant liée à la douille 58, la douille 58 est rappelée élastiquement au contact avec une face avant transversale du plongeur 46.

Les moyens d'obstacle de la douille 58, quant à eux, sont susceptibles, lorsqu'un effort d'entrée est appliqué d'arrière en avant suivant une course extrême de la tige de commande 38, et notamment à une vitesse déterminée de celle-ci, de bloquer axialement le coulissement de la douille 58 sur la partie avant 47 du plongeur 46, et ce faisant de bloquer la palpeur 52 dans une position avant extrême de sollicitation du disque de réaction 32.

Plus particulièrement, ces moyens d'obstacle sont susceptibles, lorsque l'effort d'entrée est appliqué à la vitesse déterminée sur la tige de commande 38, de coopérer avec la périphérie de la douille supplémentaire 60 pour la bloquer dans une position axiale avant extrême dans laquelle le palpeur 52 est bloqué axialement indépendamment du plongeur 46 et de la tige de commande 38.

Si le conducteur relâche prématurément son effort sur la tige 38, les douilles solidaires 58 et 60 sont bloquées par les moyens d'obstacle axial dans une position axiale avant extrême dans laquelle la douille 58, et donc le palpeur 52, sont bloqués indépendamment du plongeur 46 et de la tige de commande 38, ce qui permet de maintenir un effort de freinage maximal tant que le retour de la tige 38 de commande n'a pas provoqué la réouverture du clapet à trois voies 50, et ainsi, le retour du piston 22 d'avant en arrière.

Le détail du fonctionnement de l'embrayage unidirectionnel sera décrit plus précisément en référence aux figures suivantes 2 à 5 et 6 à 9 qui représentent des premier et second modes de réalisation différents de l'invention fonctionnant suivant un même principe.

Conformément à l'invention, les moyens d'obstacle comportent un élément 72, dont au moins une partie annulaire entoure la douille supplémentaire 60, et qui est rappelé élastiquement suivant une direction sensiblement radiale en direction de la périphérie de la douille 60 pour, lorsque l'effort d'entrée est appliqué à la vitesse déterminée, être reçu dans une gorge 74 de la douille 60 et bloquer le palpeur 52. La gorge 74 est agencée dans une partie intermédiaire de la douille supplémentaire 60, de sorte que la douille comporte une partie avant 75 formant épaulement en avant de la gorge 74.

Selon le premier mode de réalisation qui est représenté en référence aux figures 2 à 5, l'élément d'obstacle 72 présente la forme d'une fourche qui est montée coulissante suivant la direction radiale à l'intérieur d'un logement 76 qui traverse diamétralement le piston 22.

En particulier la fourche 72 comporte une première branche centrale radiale inférieure 78 qui coulisse à travers une ouverture 80 inférieure d'une paroi inférieure du logement 76, et qui est sollicitée en direction de la périphérie de la douille par un ressort de rappel 82 qui est interposé entre l'élément périphérique extérieur 25 du corps du piston 22, et la branche centrale radiale 78.

Deux deuxièmes branches latérales parallèles supérieures 84 de la fourche 72 entourent la douille 60. Ainsi, les deux branches 84 présentent la forme d'un "U" de direction transversale qui est susceptible de coopérer avec la gorge 74 de la douille supplémentaire 60.

Comme l'illustre la. figure 3, dans le cas d'une application lente dans le sens de l'aller ou dans le sens du retour de l'effort d'entrée sur la tige de commande 38, la tige de commande, le plongeur 46, les douilles 58, 60 et le piston 22 se déplacent sensiblement à la même vitesse car la pression dans la chambre arrière 18 s'équilibre à mesure que la tige de commande 38 est actionnée. De ce fait, dans cette configuration, la fourche 72, sollicitée par le ressort 82, est en butée contre la partie avant 75 de la douille 60 sans pénétrer dans la gorge 74. Le dispositif d'embrayage unidirectionnel est alors inactif.

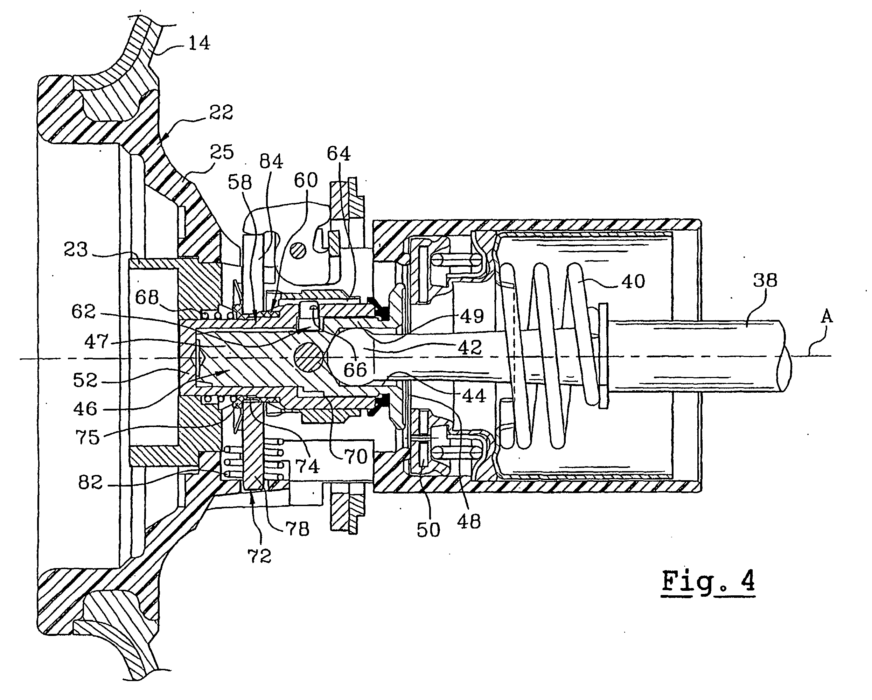

Comme l'illustre la figure 4, dans le cas d'une application rapide dans le sens de l'aller de l'effort d'entrée sur la tige de commande 38, la tige de commande, le plongeur 46, et les douilles 58, 60 se déplacent vers l'avant plus rapidement que le piston 22 du fait du retard à l'équilibrage de la pression dans la chambre arrière 18 du servomoteur. De ce fait, dans cette configuration, la fourche 72, sollicitée par le ressort 82, glisse d'abord sur la partie avant 75 de la douille 60 puis elle pénètre dans la gorge 74. La partie incurvée de la fourche 72 en "U" agencée entre les deux branches latérales 84 coopère avec la gorge 74 pour immobiliser la douille supplémentaire 60, et, ce faisant, le palpeur 52.

Le dispositif d'embrayage unidirectionnel est alors actif et permet de verrouiller le servomoteur 10 de façon qu'il fournisse un effort de freinage maximal même si le conducteur du véhicule relâche partiellement son effort sur la tige de commande 38.

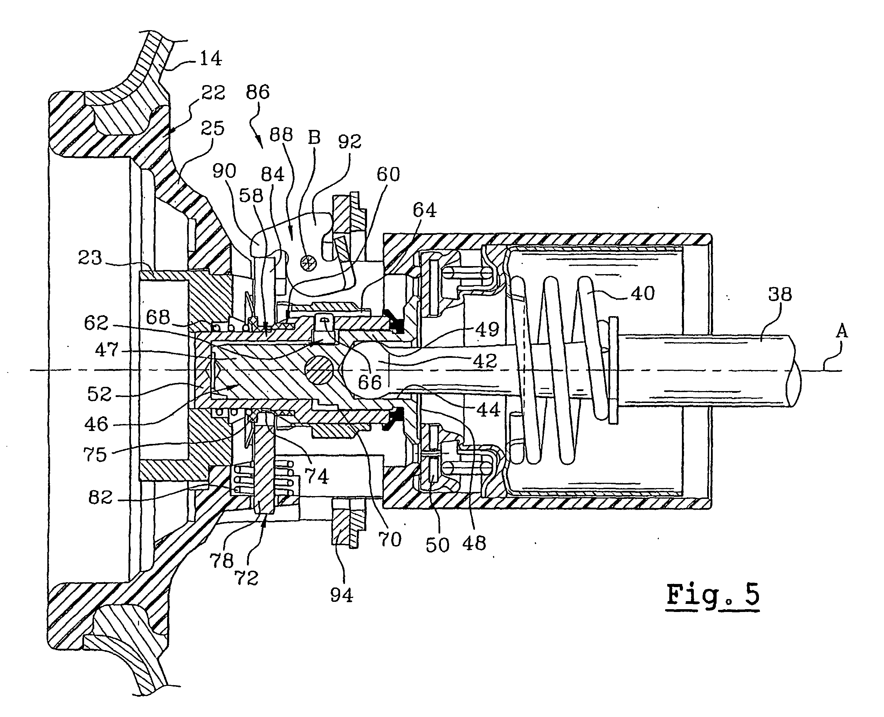

Enfin, comme l'illustre la figure 5, lorsque l'effort d'entrée est relâché, un dispositif 86 de débrayage est susceptible de déverrouiller la fourche 72 hors de la gorge 74.

A cet effet, le dispositif 86 de débrayage comporte au moins une came 88 qui est montée pivotante dans le corps du piston 22 autour d'un axe B perpendiculaire à la direction radiale des branches 84 de la fourche 72. Un premier bossage 90 de la came 88 est en appui sur l'extrémité libre de l'une au moins des deuxièmes branches latérales 84 de la fourche 72 et un deuxième bossage 92 de la came 88 est susceptible, lorsque l'effort d'entrée est relâché, de venir au contact d'une face d'appui transversale de l'enveloppe du servomoteur pour provoquer le pivotement de la came 88 et repousser radialement la fourche 72 hors de la gorge 74 de la douille 60.

Plus particulièrement, le servomoteur 10 comporte un anneau intermédiaire 94 qui est solidaire de l'enveloppe 12 du servomoteur en arrière et en regard de la came 88. Lorsque l'effort d'entrée est relâché, l'anneau intermédiaire 94 repousse le deuxième bossage 92 de la came 88 et provoque son pivotement de manière à repousser la fourche 72 hors de la gorge 74 de la douille supplémentaire 60.

Le dispositif d'embrayage unidirectionnel est alors à nouveau inactif et permet de déverrouiller le servomoteur 10.

Selon un second mode de réalisation qui est représenté en référence aux figures 6 à 9, l'élément d'obstacle 72 présente la forme d'un anneau 95 qui entoure la douille supplémentaire 60 avec jeu et à partir duquel s'étendent extérieurement une première branche 97 et une deuxième branche 98 inclinées et diamétralement opposées. L'élément 72 est aussi monté dans un logement 76 radial du piston 22 et il reçoit intérieurement la goupille 62 pour immobiliser en rotation les douilles 58 et 60 par rapport au piston 22.

La première branche 97 inférieure présente la forme d'un arc de cercle coplanaire avec l'axe A du servomoteur 10 et est montée coulissante dans un logement 100 de forme complémentaire qui forme glissière.

La deuxième branche 98 supérieure est, d'une part, sollicitée en éloignement de la périphérie de la douille supplémentaire 60 par un ressort 102 de rappel prenant appui sur le corps du piston 22 et, d'autre part, est susceptible, lorsque l'effort d'entrée est relâché, d'être sollicitée à l'encontre de l'effort de rappel par un dispositif de débrayage 104 pour repousser radialement l'anneau 95 hors de la gorge 74 de la douille supplémentaire 60.

Par ailleurs, les concavités de la première branche 97 en arc de cercle et du logement 100 complémentaire formant glissière sont tournées vers l'arrière et vers l'extérieur du servomoteur 10. La deuxième branche 98 est sensiblement rectiligne et est inclinée dans le prolongement de l'extrémité de jonction de la première branche 97 avec l'anneau 95.

Avantageusement, la profondeur de la gorge 74 de la douille supplémentaire 60 est proportionnelle au rayon commun de l'arc de courbure de la première branche 97 et du logement 100 formant glissière. Cette configuration permet de bénéficier d'une profondeur de gorge 74 importante, qui permet par conséquent une immobilisation axiale efficace de la douille supplémentaire 60, tout en disposant d'une première branche 97 présentant un faible encombrement radial.

Plus particulièrement, le dispositif de débrayage 104 comporte une crosse 106 qui emprisonne l'extrémité de la deuxième branche 98 et dont une face transversale 108 tournée vers l'arrière est susceptible, lorsque l'effort d'entrée est relâché, de venir au contact de l'enveloppe 12 du servomoteur pour provoquer le coulissement de l'élément 72 d'obstacle et le repousser radialement hors de la gorge 74 de la douille 60.

Avantageusement, le ressort de rappel 102 de l'élément 72 est un ressort hélicoïdal de compression qui est monté suivant une direction inclinée par rapport à l'axe A du servomoteur, et qui est agencé entre le corps du piston 22 et un pion de centrage 110 qui est porté par une face avant 112 de la crosse 106.

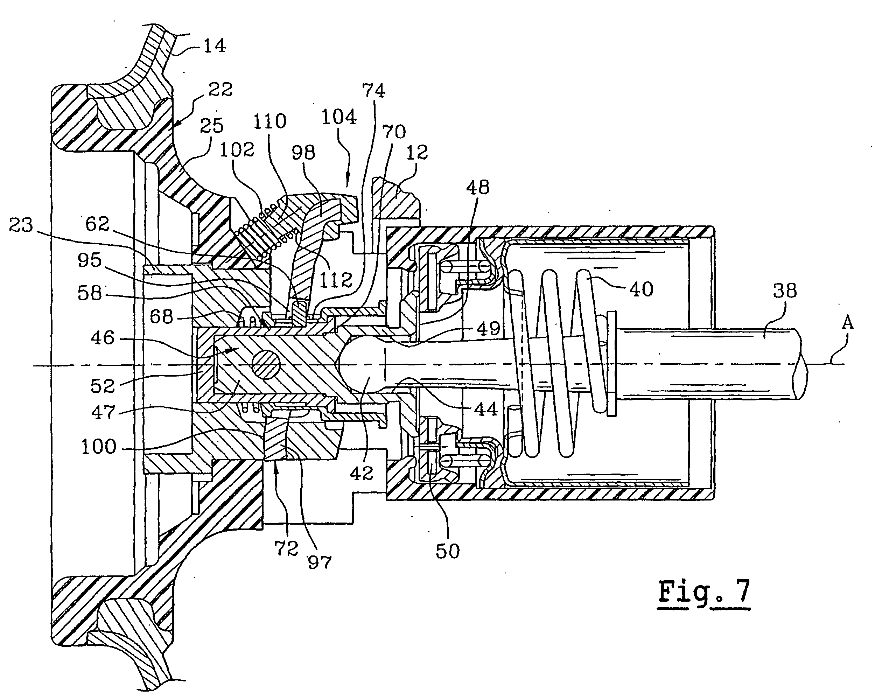

Comme l'illustre la figure 7, dans le cas d'une application lente dans le sens de l'aller ou dans le sens du retour de l'effort d'entrée sur la tige de commande 38, la tige de commande 38, le plongeur 46, les douilles 58, 60 et le piston 22 se déplacent sensiblement à la même vitesse car la pression dans la chambre arrière 18 s'équilibre à mesure que la tige de commande 38 est actionnée. De ce fait, dans cette configuration, l'anneau 95 de l'élément 72, sollicité par le ressort 102 qui le tire par l'intermédiaire de la deuxième branche 98, est reçu en butée contre la partie avant 75 de la douille 60 sans pénétrer dans la gorge 74. Le dispositif d'embrayage unidirectionnel 104 est alors inactif.

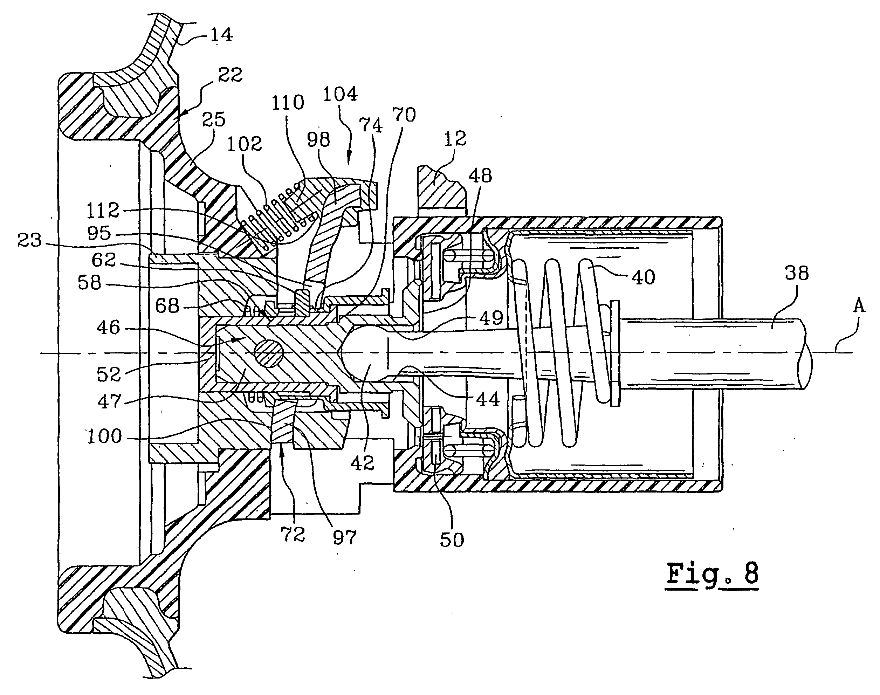

Comme l'illustre la figure 8, dans le cas d'une application rapide dans le sens de l'aller de l'effort d'entrée sur la tige de commande 38, la tige de commande 38, le plongeur 46, et les douilles 58, 60 se déplacent vers l'avant plus rapidement que le piston 22 du fait du retard à l'équilibrage de la pression dans la chambre arrière 18 du servomoteur 10. De ce fait, dans cette configuration, l'anneau 95, tiré par la deuxième branche 98 qui est sollicitée par le ressort 102, glisse d'abord sur la partie avant 75 de la douille 60 puis pénètre dans la gorge 74. L'anneau 95 coopère avec la gorge 74 pour immobiliser la douille supplémentaire 60, et, ce faisant, le palpeur 52.

Le dispositif d'embrayage unidirectionnel est alors actif et permet de verrouiller le servomoteur 10 de façon qu'il fournisse un effort de freinage maximal même si le conducteur du véhicule relâche partiellement son effort sur la tige de commande 38.

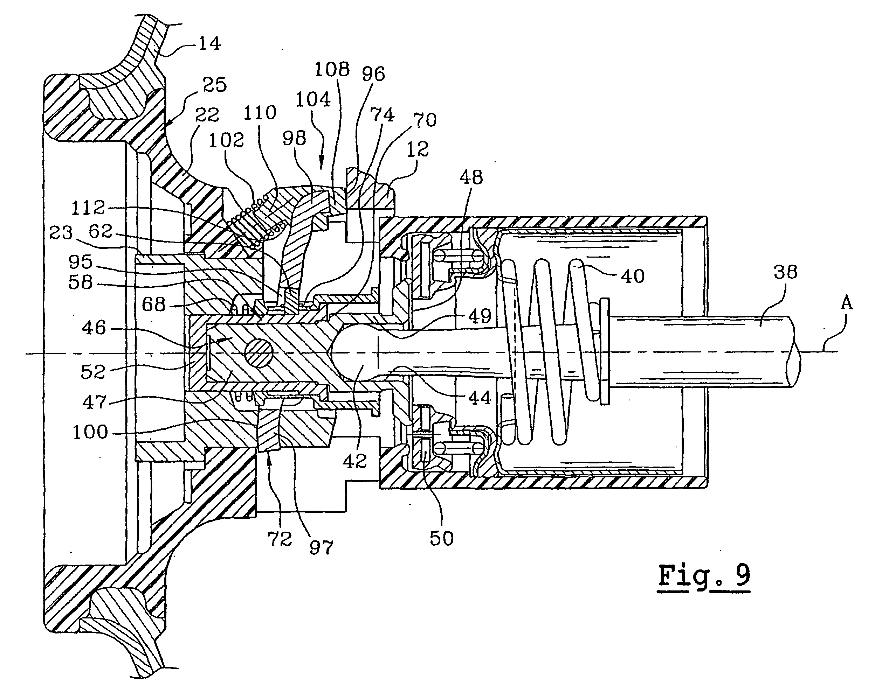

Enfin, comme l'illustre la figure 9, lorsque l'effort d'entrée est relâché, le dispositif 104 de débrayage est susceptible de déverrouiller l'élément 72 de manière que l'anneau 95 sorte hors de la gorge 74.

En effet, lorsque l'effort d'entrée est relâché, la face transversale arrière 108 de la crosse 106 vient au contact de la face d'appui transversale de l'enveloppe 12 du servomoteur et repousse la deuxième branche 98 en comprimant le ressort 102 de sorte que l'anneau 95 est aussi repoussé et sort de la gorge 74 de la douille 60.

Le dispositif d'embrayage unidirectionnel est alors à nouveau inactif et permet de déverrouiller le servomoteur 10.

On remarquera que, avantageusement, la longueur axiale du plongeur 46 n'excède pas la longueur axiale de la douille 58 dans laquelle il est reçu, de manière à proposer un dégagement arrière maximum pour le passage de l'air entre la chambre arrière 18 et le milieu extérieur soumis à la pression atmosphérique.

L'invention permet donc avantageusement de bénéficier d'un servomoteur qui permet d'appliquer un effort de freinage maximal dans des situations de freinage d'urgence.

## Revendications

1. Servomoteur (10) pneumatique d'assistance au freinage pour un véhicule automobile, du type qui comporte une enveloppe (12) rigide à l'intérieur de laquelle est mobile une cloison (14) transversale délimitant de façon étanche une chambre avant (16), soumise à une première pression (P₁) de dépression moteur ou d'une pompe à vide, et une chambre arrière (18) soumise à une deuxième pression (P₂) variant entre la dépression (P₁) et la pression atmosphérique (Pₐ), du type qui comporte un piston mobile (22) solidaire de la cloison mobile (14) se déplaçant avec la cloison mobile (14) et une tige (38) de commande se déplaçant dans le piston (22) sélectivement en fonction d'un effort axial d'entrée exercé vers l'avant à l'encontre d'un effort de rappel exercé sur la tige (38) par un ressort de rappel (40), du type dans lequel la tige (38) est mobile suivant une position d'actionnement intermédiaire ou une position d'actionnement extrême obtenue lorsque l'effort d'entrée est appliqué à une vitesse élevée déterminée, du type qui comporte un plongeur (46) qui est agencé à l'avant de la tige (38) de commande dans le piston (22) et un clapet à trois voies (50) qui comporte au moins un siège annulaire (48) arrière du plongeur (46) et qui est susceptible de faire varier la deuxième pression (P₂) régnant dans la chambre arrière (18), notamment en mettant en communication la chambre avant (16) et la chambre arrière (18) lorsque la tige (38) de commande est en position de repos ou en mettant progressivement la chambre arrière (18) en communication avec la pression atmosphérique (Pₐ) lorsque la tige (38) de commande est actionnée, du type dans lequel, dans la position extrême d'actionnement de la tige (38) de commande, un palpeur (52) monté coulissant à l'extrémité avant du plongeur (46) est sollicité par le plongeur (46) au contact d'un disque (32) de réaction solidaire du piston (22) mobile pour transmettre au plongeur (46) et à la tige (38) de commande l'effort de réaction du piston mobile (22), et du type qui comporte un dispositif d'embrayage unidirectionnel qui comporte une douille (58, 60) coaxiale solidaire du palpeur (52) qui est montée coulissante sur le plongeur (46) et des moyens d'obstacle qui sont susceptibles, lorsque l'effort d'entrée est appliqué à la vitesse déterminée, de coopérer avec la périphérie de la douille (58, 60) pour la bloquer dans une position axiale avant extrême dans laquelle le palpeur (52) est bloqué axialement indépendamment du plongeur (46) et de la tige de commande (38),
**caractérisé en ce que** les moyens d'obstacle comportent un élément (72) dont au moins une partie annulaire entoure la douille (60) et qui est rappelé élastiquement suivant une direction sensiblement radiale en direction de la périphérie de la douille (60) pour, lorsque l'effort d'entrée est appliqué à la vitesse déterminée, être reçu dans une gorge (74) de la douille (60) et bloquer le palpeur (52).

2. Servomoteur pneumatique (10) selon la revendication précédente, **caractérisé en ce que** l'élément d'obstacle (72) présente la forme d'une fourche, qui est montée coulissante suivant la direction radiale à l'intérieur d'un logement (76) du piston (22), qui comporte une première branche centrale (80) radiale qui est sollicitée en direction de la périphérie de la douille (60) par un ressort de rappel (82) prenant appui sur le corps du piston (22), et dont deux deuxièmes branches latérales parallèles opposées (84) qui entourent la douille (60) sont susceptibles, lorsque l'effort d'entrée est relâché, d'être sollicitées à l'encontre de l'effort de rappel par un dispositif (86) de débrayage pour repousser radialement l'élément (72) hors de la gorge (74) de la douille (60).

3. Servomoteur pneumatique (10) selon la revendication précédente, **caractérisé en ce que** le dispositif (86) de débrayage comporte au moins une came (88) qui est montée pivotante dans le corps du piston (22) autour d'un axe (B) perpendiculaire à la direction radiale des branches (84) de l'élément d'obstacle (72), dont un premier bossage (90) est en appui sur l'une au moins des deuxièmes branches (84) de l'élément (72) d'obstacle, et dont un deuxième bossage (92) est susceptible, lorsque l'effort d'entrée est relâché, de venir au contact d'une face d'appui transversale de l'enveloppe (12) du servomoteur pour provoquer le pivotement de la came (88) et repousser radialement l'élément d'obstacle (72) hors de la gorge (74) de la douille (60).

4. Servomoteur pneumatique (10) selon la revendication 2, **caractérisé en ce que** l'élément d'obstacle (72) présente la forme d'un anneau (95) qui entoure la douille (60) avec jeu et à partir duquel s'étendent extérieurement une première (97) et une deuxième (98) branches inclinées et diamétralement opposées, la première branche (97) présentant la forme d'un arc de cercle coplanaire avec l'axe (A) du servomoteur et étant montée coulissante dans un logement (100) formant glissière de forme complémentaire, et la deuxième branche (98) étant, d'une part, sollicitée en éloignement de la périphérie de la douille (60) par un ressort de rappel prenant appui sur le corps du piston (22) et étant, d'autre part, susceptible lorsque l'effort d'entrée est relâché, d'être sollicitée à l'encontre de l'effort de rappel par un dispositif (104) de débrayage pour repousser radialement l'élément (72) hors de la gorge (74) de la douille (60).

5. Servomoteur pneumatique (10) selon la revendication précédente, **caractérisé en ce que** les concavités de la première branche (97) en arc de cercle et du logement complémentaire (100) formant glissière sont tournées vers l'arrière et vers l'extérieur du servomoteur (10).

6. Servomoteur pneumatique selon l'une des revendications 4 ou 5, **caractérisée en ce que** la deuxième branche (98) est sensiblement rectiligne et est inclinée dans le prolongement de l'extrémité de jonction de la première branche (97) avec l'anneau (95).

7. Servomoteur pneumatique (10) selon l'une quelconque des revendications 4 à 6, **caractérisé en ce que** la profondeur de la gorge (74) de la douille (60) est proportionnelle au rayon commun de l'arc de courbure de la première branche (97)et du logement (100) formant glissière.

8. Servomoteur pneumatique (10) selon l'une quelconque des revendications 4 à 7, **caractérisé en ce que** le dispositif de débrayage (104) comporte une crosse (106) qui emprisonne l'extrémité de la deuxième branche (98) et dont une face transversale tournée vers l'arrière est susceptible, lorsque l'effort d'entrée est relâché, de venir au contact d'une face d'appui transversale de l'enveloppe (12) du servomoteur (10) pour provoquer le coulissement de l'élément d'obstacle (72) et le repousser radialement hors de la gorge (74) de la douille (60).

9. Servomoteur pneumatique (10) selon la revendication précédente, **caractérisé en ce que** le ressort de rappel (102) de l'élément est un ressort hélicoïdal de compression qui est monté suivant une direction inclinée par rapport à l'axe (A) du servomoteur (10), et qui est agencé entre le corps du piston (22) et un pion de centrage (112) qui est porté par une face avant de la crosse (106).

10. Servomoteur (10) pneumatique selon l'une quelconque des revendications précédentes, **caractérisé en ce que** la douille (58) est tubulaire, d'un diamètre intérieur égal à un diamètre extérieur d'une partie avant du plongeur (46).

11. Servomoteur (10) pneumatique selon l'une quelconque des revendications précédentes, **caractérisé en ce que** la longueur axiale du plongeur (46) n'excède pas la longueur axiale de la douille (58) dans laquelle il est reçu, de manière à proposer un dégagement arrière maximum pour le passage de l'air entre la chambre arrière (18) et le milieu extérieur soumis à la pression atmosphérique.

## Patentansprüche

1. Pneumatischer Servomotor (10) zur Bremsunterstützung für ein Kraftfahrzeug, vom Typ, der ein starres Gehäuse (12) aufweist, in dem eine quer verlaufende Wand (14) beweglich ist, welche in dichter Weise eine vordere Kammer (16), die einem ersten Druck (P1) vom Unterdruck des Motors oder einer Vakuumpumpe ausgesetzt ist, und eine hintere Kammer (18), die einem zweiten Druck (P2) ausgesetzt ist, der zwischen dem Unterdruck (P1) und dem atmosphärischen Druck (Pa) variiert, abgrenzt, vom Typ, der einen mit der beweglichen Wand (14) verbundenen beweglichen Kolben (22), der sich mit der beweglichen Wand (14) verschiebt, und eine Steuerstange (38) aufweist, die sich im Kolben (22) verschiebt, in Abhängigkeit von einer axialen Eingangskraft, die nach vorne wirkt, entgegen einer Rückstellkraft, die durch eine Rückstellfeder (40) auf die Stange ausgeübt wird, vom Typ, bei welchem die Stange (38) entlang einer mittleren Betätigungsstellung oder einer extremen Betätigungsstellung, die erreicht wird, wenn eine Eingangskraft bei einer bestimmten, erhöhten Geschwindigkeit aufgebracht wird, beweglich ist, vom Typ, der einen Tauchkolben (46), der vorne an der Steuerstange (38) in dem Kolben (22) angeordnet ist, und ein Dreiwegeventilelement (50) aufweist, das mindestens einen hinteren ringförmigen Sitz (48) des Tauchkolbens (46) aufweist und das den in der hinteren Kammer (18) herrschenden zweiten Druck (P2) variieren kann, insbesondere indem die vordere Kammer (16) und die hintere Kammer (18) verbunden werden, wenn die Steuerstange (38) in der Ruhestellung ist, oder indem allmählich die hintere Kammer (18) mit dem atmosphärischen Druck (Pa) verbunden wird, wenn die Steuerstange (38) betätigt wird, vom Typ, bei welchem in der extremen Betätigungsstellung der Steuerstange (38) ein am vorderen Ende des Taucherkolbens gleitend angebrachter Taster (52) bei der Berührung mit einer mit dem beweglichen Kolben (22) verbundenen Reaktionsscheibe (32) von dem Tauchkolben (46) beaufschlagt wird, um dem Tauchkolben (46) und der Steuerstange (38) die Reaktionskraft des beweglichen Kolbens (22) zu übermitteln, und vom Typ, der eine in eine Richtung wirkende Kupplungsvorrichtung aufweist, die eine mit dem Taster (52) fest verbundene koaxiale Hülse (58, 60), die gleitend auf dem Tauchkolben (46) angebracht ist, und Hindernismittel aufweist, die, wenn die Eingangskraft bei der näher bestimmten Geschwindigkeit aufgebracht wird, mit dem Umfang der Hülse (58, 60) zusammenwirken können, um sie einer extremen vorderen axialen Stellung zu blockieren, in welcher der Taster (52) unabhängig von dem Tauchkolben (46) und der Steuerstange (38) axial blockiert ist,
**dadurch gekennzeichnet, dass** die Hindernismittel ein Element (72) aufweisen, bei dem zumindest ein ringförmiger Teil die Hülse (60) umschließt und der entlang einer im wesentlichen radialen Richtung in Richtung des Umfangs der Hülse (60) elastisch zurückgestellt wird, um in einer Nut (74) der Hülse (60) aufgenommen zu werden und den Taster (52) zu blockieren, wenn die Eingangskraft bei der bestimmten Geschwindigkeit aufgebracht wird.

2. Pneumatischer Servomotor (10) nach dem vorhergehenden Anspruch, **dadurch gekennzeichnet, dass** das Hinderniselement (72) die Form einer Gabel aufweist, die entlang der radialen Richtung innerhalb einer Aufnahme (76) des Kolbens (22) gleitend angebracht ist, die einen radialen ersten mittleren Arm (80) aufweist, der von einer sich auf den Körper des Kolbens (22) stützenden Rückstellfeder (82) in Richtung des Umfangs der Hülse (60) beaufschlagt wird und bei der zwei zweite parallele, entgegengesetzte Seitenarme (84), welche die Hülse (60) umschließen, von einer Entkupplungsvorrichtung (86), wenn die Eingangskraft verringert wird, gegen eine Rückstellkraft beaufschlagt werden können, um das Element (72) aus der Nut (74) der Hülse (60) radial heraus zu drücken.

3. Pneumatischer Servomotor (10) nach dem vorhergehenden Anspruch, **dadurch gekennzeichnet, dass** die Entkupplungsvorrichtung (86) zumindest eine Kurvenfläche (88) aufweist, die in dem Körper des Kolbens (22) um eine Achse (B), die senkrecht zur radialen Richtung der Arme (84) des Hinderniselements (72) ist, schwenkbar angebracht ist, bei der eine erste Erhebung (90) sich auf mindestens einem der zweiten Arme (84) des Hinderniselements (72) stützt und bei der eine zweite Erhebung (92), wenn die Eingangskraft verringert wird, eine quer verlaufende Stützfläche des Gehäuses (12) des Servomotors berühren kann, um das Schwenken der Kurvenfläche (88) zu bewirken und das Hinderniselement (72) aus der Nut (74) der Hülse (60) heraus zu drücken.

4. Pneumatischer Servomotor (10) nach Anspruch 2, **dadurch gekennzeichnet, dass** das Hinderniselement (72) die Form eines Rings (95) aufweist, welcher die Hülse (60) mit Spielraum umschließt und ausgehend von dem sich äußerlich ein erster (97) und ein zweiter (98) Arm erstrecken, die geneigt und diametral entgegengesetzt sind, wobei der erste Arm (97) die Form eines Kreisbogens hat, der mit der Achse (A) des Servomotors koplanar ist und gleitend in eine Aufnahme (100) angebracht ist, die eine komplementärförmige Gleitfläche bildet, und wobei der zweite Arm (98) zum einen von einer sich auf den Körper des Kolbens (22) stützenden Rückstellfeder vom Umfang der Hülse (60) weg beaufschlagt wird und zum anderen, wenn die Eingangskraft verringert wird, von einer Entkupplungsvorrichtung (104) gegen eine Rückstellkraft beaufschlagt werden kann, um das Element (72) aus der Nut (74) der Hülse (60) radial heraus zu drücken.

5. Pneumatischer Servomotor (10) nach dem vorhergehenden Anspruch, **dadurch gekennzeichnet, dass** die Konkavitäten des ersten, kreisbogenförmigen Arms (97) und der komplementären Aufnahme (100), die eine Gleitfläche bildet, zur hinteren und zur äußeren Seite des Servomotors (10) gerichtet sind.

6. Pneumatischer Servomotor (10) nach einem der Ansprüche 4 und 5, **dadurch gekennzeichnet, dass** der zweite Arm (98) im wesentlichen geradlinig ist und in der Verlängerung des Endes der Verbindung des ersten Arms (97) mit dem Ring (95) geneigt ist.

7. Pneumatischer Servomotor (10) nach einem der Ansprüche 4 bis 6, **dadurch gekennzeichnet, dass** die Tiefe der Nut (74) der Hülse (60) proportional ist zum gemeinsamen Radius des Krümmungsbogens des ersten Arms (97) und der Aufnahme (100), die eine Gleitfläche bildet.

8. Pneumatischer Servomotor (10) nach einem der Ansprüche 4 bis 7, **dadurch gekennzeichnet, dass** die Entkupplungsvorrichtung (104) einen Kreuzkopf (106) aufweist, der das Ende des zweiten Arms (98) einschließt und bei dem eine nach hinten gerichtete, quer verlaufende Fläche, wenn die Eingangskraft verringert wird, eine quer verlaufende Stützfläche des Gehäuses (12) des Servomotors (10) berühren kann, um das Gleiten des Hinderniselements (72) zu bewirken und es aus der Nut (74) der Hülse (60) radial heraus zu drücken.

9. Pneumatischer Servomotor (10) nach dem vorhergehenden Anspruch, **dadurch gekennzeichnet, dass** die Rückstellfeder (102) des Elements eine schraubenförmige Druckfeder ist, die entlang einer zur Achse (A) des Servomotors (10) geneigten Richtung angebracht ist und die zwischen dem Körper des Kolbens (22) und einem Zentrierungszapfen (112), der von einer vorderen Fläche des Kreuzkopfes (106) getragen wird, angeordnet ist.

10. Pneumatischer Servomotor (10) nach einem der vorhergehenden Ansprüche, **dadurch gekennzeichnet, dass** die Hülse (58) röhrenförmig ist mit einem inneren Durchmesser, der dem äußeren Durchmesser eines vorderen Teils des Tauchkolbens (46) entspricht.

11. Pneumatischer Servomotor (10) nach einem der vorhergehenden Ansprüche, **dadurch gekennzeichnet, dass** die axiale Länge des Tauchkolbens (46) die axiale Länge der Hülse (58), in der er aufgenommen wird, nicht überschreitet, so dass ein hinterer maximaler Durchgang für den Luftdurchfluss zwischen der hinteren Kammer (18) und dem äußeren Bereich, der dem atmosphärischen Druck ausgesetzt ist, bereit gestellt wird.

## Claims

1. Pneumatic brake booster (10) for a motor vehicle, of the type comprising a rigid casing (12) inside which there can move a transverse partition (14) sealingly delimiting a front chamber (16), subjected to a first depressed pressure (P₁) from the engine or from a vacuum pump, and a rear chamber (18) subjected to a second pressure (P₂) which varies between the depressed pressure (P₁) and atmospheric pressure (Pₐ), of the type which comprises a moving piston (22) secured to the moving partition (14) moving with the moving partition (14) and an operating rod (38) moving in the piston (22) selectively according to an axial input force exerted forward against the action of a return force exerted on the rod (38) by a return spring (40), of the type in which the rod (38) can move into an intermediate actuating position or into an extreme actuating position that is obtained when the input force is applied at a determined high rate, of the type which comprises a plunger (46) which is arranged at the front of the operating rod (38) in the piston (22) and a three-way valve (50) which has at least one rear annular seat (48) of the plunger (46) and is capable of causing the second pressure (P2) in the rear chamber (18) to vary, particularly by placing the front chamber (16) and the rear chamber (18) in communication when the operating rod (38) is in the position of rest or by gradually placing the rear chamber (18) in communication with atmospheric pressure (Pₐ) when the operating rod (38) is actuated, of the type in which, in the extreme actuating position of the operating rod (38), a feeler (52) slideably mounted at the front end of the plunger (46) is urged by the plunger (46) into contact with a reaction disc (32) secured to the piston (22) able to move to transmit the reaction force of the moving piston (22) to the plunger (46) and to the operating rod (38), and of the type which comprises a one-way clutch device which comprises a coaxial bushing (58, 60) secured to the feeler (52) and slideably mounted on the plunger (46), and obstacle means which are capable, when the input force is applied at the determined rate, of collaborating with the periphery of the bushing (58, 60) to lock it in an extreme forward axial position in which the feeler (52) is axially locked independently of the plunger (46) and of the operating rod (38),
**characterized in that** the obstacle means comprise an element (72), at least one annular part of which surrounds the bushing (60) and which is elastically returned in a substantially radial direction towards the periphery of the bushing (60) so as, when the input force is applied at the determined rate, to become housed in a groove (74) of the bushing (60) and lock the feeler (52).

2. Pneumatic booster (10) according to the preceding claim, **characterized in that** the obstacle element (72) has the form of a fork, mounted to slide in the radial direction inside a housing (76) of the piston (22), which has a radial first central branch (80) urged towards the periphery of the bushing (60) by a return spring (82) resting against the body of the piston (22), and of which two opposed parallel lateral second branches (84), which surround the bushing (60), are capable, when the input force is relaxed, of being urged against the action of the return force by a clutch release device (86) to push the element (72) radially out of the groove (74) of the bushing (60).

3. Pneumatic booster (10) according to the preceding claim, **characterized in that** the clutch release device (86) comprises at least one cam (88) which is pivotably mounted in the body of the piston (22) about an axis (B) perpendicular to the radial direction of the branches (84) of the obstacle element (72), a first lobe (90) of which bears against at least one of the second branches (84) of the obstacle element (72) and a second lobe (92) of which is capable, when the input force is relaxed, of coming into contact with a transverse bearing face of the casing (12) of the booster to cause the cam (88) to pivot and push the obstacle element (72) radially back out of the groove (74) of the bushing (60).

4. Pneumatic booster (10) according to Claim 2, **characterized in that** the obstacle element (72) has the form of an annulus (95) surrounding the bushing (60) with clearance and from which there extend outwards a first (97) and a second (98) branch which are inclined and diametrically opposed, the first branch (97) having the shape of a circular arc coplanar with the axis (A) of the booster and being slideably mounted in a housing (100) forming a slideway of complementary shape, and the second branch (98) being, on the one hand, urged away from the periphery of the bushing (60) by a return spring bearing against the body of the piston (22) and being, on the other hand, capable, when the input force is relaxed, of being urged against the action of the return force by a clutch release device (104) to push the element (72) radially back out of the groove (74) of the bushing (60).

5. Pneumatic booster (10) according to the preceding claim, **characterized in that** the concavities of the circular-arc-shaped first branch (97) and of the complementary slideway-forming housing (100) face backwards and towards the outside of the booster (10).

6. Pneumatic booster according to either of Claims 4 and 5, **characterized in that** the second branch (98) is substantially straight and inclined in the continuation of the end where the first branch (97) meets the annulus (95).

7. Pneumatic booster (10) according to any one of Claims 4 to 6, **characterized in that** the depth of the groove (74) of the bushing (60) is proportional to the common radius of the arc of curvature of the first branch (97) and of the slideway-forming housing (100).

8. Pneumatic booster (10) according to any one of Claims 4 to 7, **characterized in that** the clutch release device (104) has a stock (106) which traps the end of the second branch (98) and of which a backward-facing transverse face is capable, when the input force is relaxed, of coming into contact with a transverse bearing face of the casing (12) of the booster (10) so as to cause the obstacle element (72) to slide and to push it radially out of the groove (74) of the bushing (60).

9. Pneumatic booster (10) according to the preceding claim, **characterized in that** the return spring (102) of the element is a helical compression spring mounted in a direction that is inclined with respect to the axis (A) of the booster (10), and which is arranged between the body of the piston (22) and a centring peg (112) carried by a front face of the stock (106).

10. Pneumatic booster (10) according to any one of the preceding claims, **characterized in that** the bushing (58) is tubular, with an inside diameter equal to an outside diameter of a front part of the plunger (46).

11. Pneumatic booster (10) according to any one of the preceding claims, **characterized in that** the axial length of the plunger (46) does not exceed the axial length of the bushing (58) in which it is housed, so as to offer a maximum rear clearance for the passage of air between the rear chamber (18) and the external medium subjected to atmospheric pressure.
